(19) Europäisches Patentamt
European Patent Office
Office européen des brevets

(11) Publication number: 0 182 415
B1

(12) EUROPEAN PATENT SPECIFICATION

(45) Date of publication of patent specification: 19.09.90

(51) Int. Cl.$^5$: C 07 F 7/18, C 08 K 5/54

(21) Application number: 85201760.7

(22) Date of filing: 30.10.85

# (54) Process for the preparation of stabilizers for organic polymers and stabilizers so obtained.

(30) Priority: 13.11.84 IT 2353984

(43) Date of publication of application:
28.05.86 Bulletin 86/22

(45) Publication of the grant of the patent:
19.09.90 Bulletin 90/38

(84) Designated Contracting States:
AT BE CH DE FR GB LI LU NL SE

(56) References cited:
FR-A-2 312 534
FR-A-2 433 533

"Developments in Polymer Stabilisation -2" edited by Gerald Scott (chapter 5) Josef Luston : " Physical Loss of Stabilisers from Polymers" Applied Science Publishers, London 1980.

(73) Proprietor: ENICHEM SYNTHESIS S.p.A.
Via Ruggero Settimo 55
I-90139 Palermo (IT)

(72) Inventor: Greco, Alberto
Via Mughetti 2
I-20077 Dresano Milan (IT)
Inventor: Pallini, Luciano
Via V. Bottego 3
I-43045 Fornovo Taro Parma (IT)

(74) Representative: Roggero, Sergio et al
Ing. Barzanò & Zanardo Milano S.p.A. Via Borgonuovo 10
I-20121 Milano (IT)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to organic-polymer-stabilizing substituted sterically hindered amines and to the process for their preparation. Polymer degradation due to environmental factors leads to a decay of the stress-strain properties of the polymers concerned, and originates a drop of the viscosity index. Therefore, it is usual to add to organic polymers suitable stabilizing additives. Among these, sterically hindered amines or phenols are conventionally used. FR—A—2 433 533 discloses compounds of phenolic nature, and FR—A—2 312 534 discloses compounds in which a piperidine ring is bonded to an alkoxysilanol group via an oxygen bridge. Moreover, in order to solve the problem of the incompatibility between the polymer concerned and the stabilizer, EP—A—162 523 and EP—A—162 524 have suggested sterically hindered amines of phenols bearing a hydrolyzable silicic function. These latter compounds are hydrolyzed at the silicic function aforementioned and the silanol groups so set free are capable of producing complex structures which permanently remain encased in the polymer structure. It has now been ascertained that compounds of this kind, bearing at least one alkoxysilanol group can be transesterified with monohydroxy- or polyhydroxy aliphatic alcohols, to produce complex compounds which not only retain their stabilizing properties in time, but can be easily and homogeneously dispersed in the polymer since they are either oily or waxy, are completely polymer-compatible, exceptionally stable to heat, and cannot be extracted from the polymer even under the most severe conditions.

Accordingly, the invention provides: A process for preparing organic-polymer-stabilizing substituted sterically hindered amines, comprising catalytically transesterifying a sterically hindered amine bearing at least one methoxysilanol or ethoxysilanol group, selected from the compounds of the formulae:

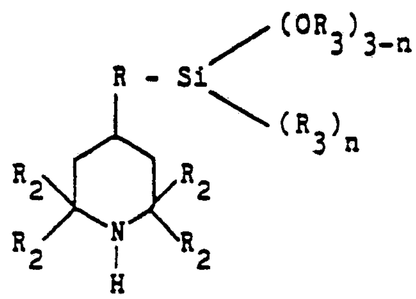

(I)

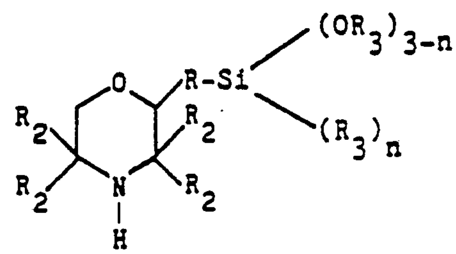

(II)

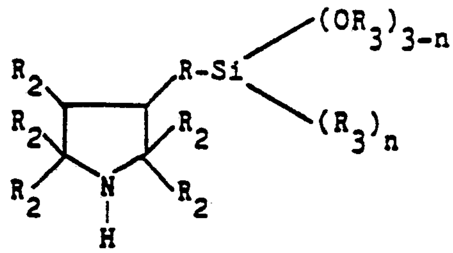

(III)

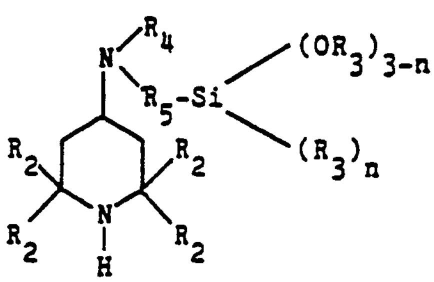

(IV)

wherein:

R represents an aliphatic hydrocarbon or oxyhydrocarbon group, containing from 2 to 10 carbon atoms;

$R_2$ represent the methyl radical;

$R_3$ represent independently the methyl or ethyl radical;

$R_4$ represents a straight or branched alkyl group, containing from 1 to 10 carbon atoms;

$R_5$ represents a straight or branched alkylene radical containing from 2 to 5 carbon atoms, and

n is 0, 1 or 2,

either with a monohydroxy aliphatic alcohol having at least 6 carbon atoms, or with a polyhydroxy alcohol

having at least 4 carbon atoms, the ratio of the methoxy or the ethoxy groups to the alcoholic hydroxyls being from 1:1 to 3:1, continuously removing the as-formed methanol or ethanol, and recovering the transesterification product.

The sterically hindered amines, useful to the purposes of the present invention, are those which can be defined by means of the following general formulae:

(V) (VI) (VII)

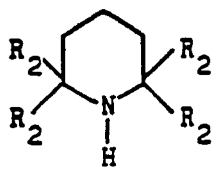
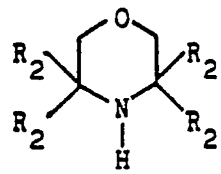
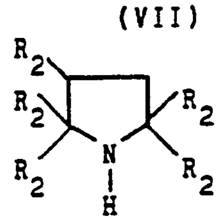

wherein $R_2$ are methyl radicals.

These sterically hindered amines contain within their molecule at least one methoxysilanol or ethoxysilanol group, i.e., one group which can be defined by means of the general formula:

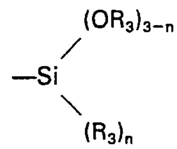
(VIII)

wherein $R_3$ is the methyl or ethyl radical; and n is 0, 1 or 2.

The group (VIII) is bonded to the sterically hindered amine via an Si-C bond, and in any possible position in the amine molecule. Thus, typical classes of sterically hindered amines bearing at least one methoxy- or ethoxy group are the following:

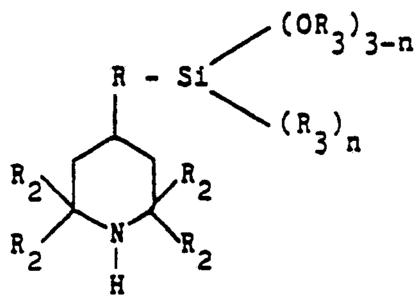
(I)

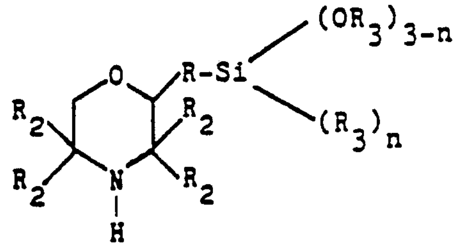
(II)

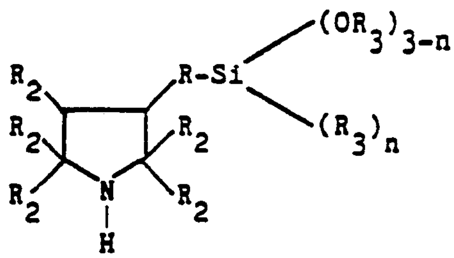
(III)

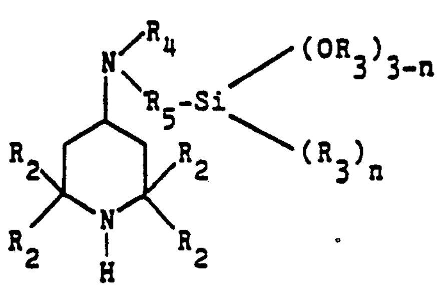
(IV)

wherein R represents generally a straight or branched aliphatic hydrocarbon or oxy-hydrocarbon group containing from 2 to 10 carbon atoms, $R_4$ represents a straight or branched alkyl group containing from 1 to

10 carbon atoms, and $R_5$ represents a straight or branched alkylene group, containing from 2 to 5 carbon atoms. Specific examples of sterically hindered amines which contain methoxysilanol or ethoxysilanol groups are the following:

(IX) 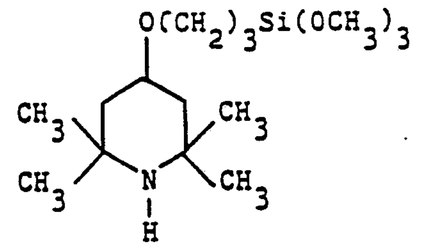

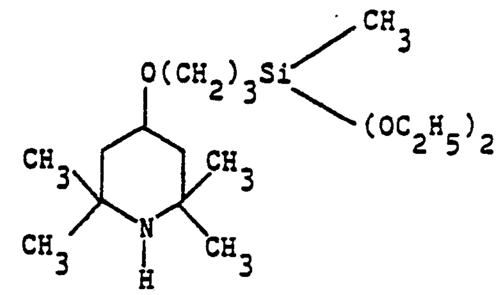 (X)

(XI) 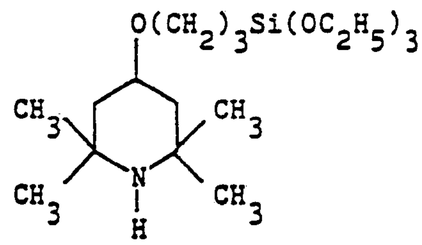

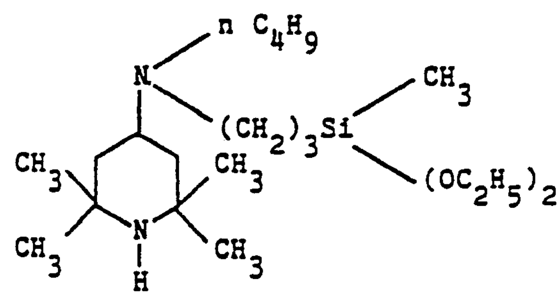 (XII)

Alcohols suitable to the purpose are:

— aliphatic monohydroxy alcohols containing from 6 to 18 carbon atoms, with straight or branched chain; such as hexanol, octanol, ethylhexanol, capryl alcohol, cetyl alcohol, lauryl alcohol and stearyl alcohol;

— monoalkyl ethers of aliphatic dihydroxy alcohols, containing in the overall from 6 to 30 carbon atoms in their molecule; such as e.g., diethylene glycol monobutyl ether;

— alipahtic dihydroxy alcohols or dihydroxy polyether alcohols containing from 4 to 12 carbon atoms, with straight or branched chain; such as butanediol, pentanediol, hexanediol, decanediol, 2,2-dimethyl-propanediol and diethylene glycol;

— aliphatic tri- or tetrahydroxy alcohols containing from 4 to 10 carbon atoms, such as pentaerythritol and trimethylolpropane.

Transesterification catalysts useful to the purpose are titanium alkoxides, magnesium alkoxytitanates, organic compounds of tin and of lead, such as dibutyltin oxide and lead octanoate, sodium silanates and alkaline metal alkoxides. Among all catalysts sodium methoxide is the preferred one, which may be conveniently used in an amount within the range of from 0.2 to 2% by weight relatively to the total weight of the reactants, and which may be fed as a solution in methanol.

The reaction temperatures are generally comprised within the range of from 100 to 150°C and the corresponding reaction times are from about 4 hours to about 30 minutes.

To the purpose of removing more easily the methanol and the ethanol which are formed as the reaction by-products, it is possible to operate under a reduced pressure and/or to make an inert gas such as nitrogen flow into the reaction mass.

At the end of the reaction it may be convenient to neutralize the catalyst and remove the catalyst residues. So, in the case of sodium methoxide, at the end of the reaction acetic acid can be added, and the so formed sodium acetate is removed by filtering.

The products of the transesterification reaction are more or less complex as a function of the number of methoxy or ethoxy groups and of the hydroxy groups bonded to the reactants. In this reaction it is not necessary that all the said functional groups are reacted. It is preferred, instead, that the transesterification products attain a molecular weight comprised between 300 and 1000.

Under these conditions, the desired stabilizer compounds are obtained as oils or waxes, colourless or slightly colored of pale yellow, which are completely soluble in the most common organic solvents, in particular in the aliphatic hydrocarbons, such as hexane, heptane and isooctane.

By means of the stabilizer compounds of the present invention, all organic polymers in general and in particular the homopolymers and copolymers of olefins, of diolefins, such as polypropylene, polybutadiene and polyethylene can be stabilized.

The incorporation of the stabilizer into the organic polymer and the homogenizing between the stabilizer and the polymer can be carried out by means of the usual techniques.

The stabilized polymeric compositions contain generally such an amount of stabilizer as to bring an amount of from 0.005 to 0.02% by weight of nitrogen.

The invention is better illustrated by the following experimental Examples.

Examples 1—10

In these experimental examples the following general procedure is used.

The reactants are introduced into a 25 ml flask under an atmosphere of anhydrous nitrogen. The flask is equipped with a magnetic-bar stirrer, with a nitrogen inlet pipe, and with a Liebig condenser. The flask is immersed into a bath heated at 120°C, and then sodium methoxide (as a 30% by weight solution in methanol) is added in an amount of 0.5% by weight relatively to the reactants.

The reaction is made proceed over two hours, at the temperature said, while flowing a weak nitrogen stream. At the end of the said time a vacuum of 66,66 hPais applied over the subsequent 20 minutes.

The process is then continued by cooling to the room temperature (20—25°C) and acetic acid (30 mg) is then added. One hour after, excess acid is removed in vacuo at 6,666 hPa (5 torr) and 100°C. To purify the end product from sodium acetate, the product is dissolved in isooctane and the solution filtered, and isooctane is removed under vacuum (66,66 hPa (50 torr). The evolved methanol or ethanol can be determined by differential weighing the reaction vessel.

The results of the Examples are tabulated in the Table to follow.

T A B L E

| Example | Compound A Type | Compound A Mmol | Compound B Type | Compound B Mmol | A/B Ratio | N (% by weight) | Developed alcohol (g) | Reaction yield (%) | Volatility $t^1$ | Volatility $t^2$ | Volatility $t^3$ | Molecular weight |
|---|---|---|---|---|---|---|---|---|---|---|---|---|
| 1 | I | 10.0 | OA | 20.0 | 2.0 | 2.7 | 22 | 100 | 255 | 280 | 300 | 485 (*) |
| 2 | I | 10.0 | SA | 10.0 | 1.0 | 2.5 | 10.3 | 100 | 260 | 315 | 360 | 505 (**) |
| 3 | I | 10.0 | CA | 10.0 | 1.0 | 2.6 | 10.3 | 100 | 250 | 300 | 340 | -- |
| 4 | I | 10.0 | LA | 15.0 | 1.5 | 2.5 | 15.8 | 100 | 240 | 305 | 345 | -- |
| 5 | II | 20.0 | HD | 20.0 | 1.0 | 3.5 | 21.9 | 55 | 315 | 355 | 395 | -- |
| 6 | II | 10.0 | BD | 10.0 | 1.0 | 3.8 | 11.7 | 58 | 215 | 245 | 325 | -- |
| 7 | II | 10.0 | PD | 10.0 | 1.0 | 3.6 | 10.2 | 51 | 355 | 370 | 390 | -- |
| 8 | II | 9.7 | DEG | 9.7 | 1.0 | 3.6 | 10.0 | 52 | -- | -- | -- | -- |
| 9 | III | 10.0 | LA | 15 | 1.5 | 2.5 | 15.3 | 100 | 250 | 305 | 345 | -- |
| 10 | I | -- | -- | -- | -- | 4.39 | -- | -- | 140 | 155 | 180 | 319 |
| 11 | II | -- | -- | -- | -- | 4.23 | -- | -- | 145 | 165 | 190 | 331 |
| 12 | III | -- | -- | -- | -- | 3.88 | -- | -- | 160 | 170 | 190 | 361 |

In this Table the A component is the sterically hindered amine concerned, bearing methoxy- or ethoxysilanol groups. In particular, the following compounds have been used:

Type I

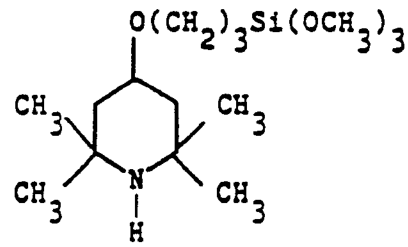

(IX)

Type II

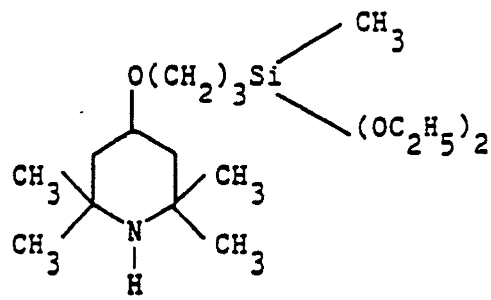

(X)

Type III

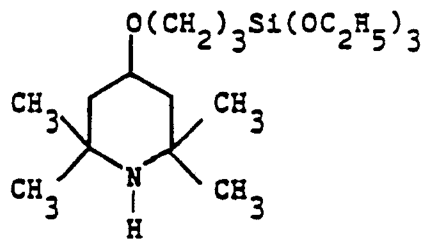

(XI)

In the Table, also the amount by moles of such compounds fed to the reaction is reported.

By "B Compound" the mono- or poly-hydroxy alcohol is meant, and in particular the following types of alcohols have been used:

| | |
|---|---|
| OA | 2-ethyl-1-hexanol |
| CA | cetyl alcohol |
| SA | stearyl alcohol |
| LA | lauryl alcohol |
| BP | 1,4-butanediol |
| PD | 1,5-pentanediol |
| HD | 1,6-hexanediol |
| DEG | diethylene glycol |

In the Table also the amount by moles of alcohol fed to the reaction is reported.

The other data reported in the Table are:

— the molar ratio of the compound A to the compound B fed to the reaction;

— the % by weight of nitrogen (as determined by means of the elemental analysis) of the sterically hindered amine concerned;

— the amount in grammes of methanol or of ethanol developed during the course of the transesterification, as determined by weighing as previously indicated;

— the yield of the transesterification reaction, expressed as:

(mmoles of methanol or ethanol developed/mequivalents of OH hydroxy groups in the mono- or poly-hydroxyalcohol) × 100;

— volatility of the product, as determined by thermogravimetric analysis (temperature increasing rate 10°C per minute, transportation gas nitrogen at 10 l/hour);

— $t^1$, $t^2$ and $t^3$ correspond respectively to the temperatures (°C) at which the reaction product loses 1/8, 1/4 and 1/2 of its weight;

— molecular weight of the reaction product, as determined by VPO (vapour phase osmometry) in methanol (*) or in toluene (**).

In the Table the volatility values of A compounds as such are reported (Examples 10, 11 and 12).

The better values of thermal stability of the stabilizer compounds according to the present invention than of A compounds as such can be noted.

**Claims**

1. Process for preparing organic-polymer-stabilizing substituted sterically hindered amines, comprising catalytically transesterifying a sterically hindered amine bearing at least one methoxysilanol or ethoxysilanol group, selected from the compounds of the formulae:

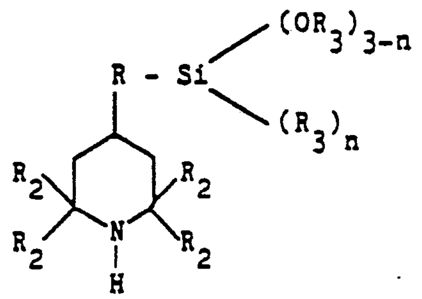

(I)

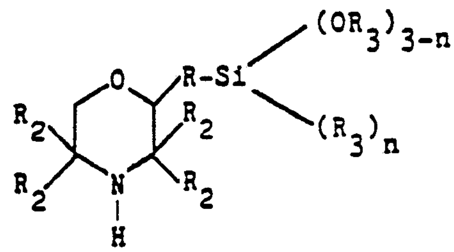

(II)

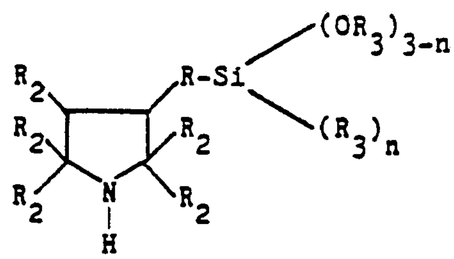

(III)

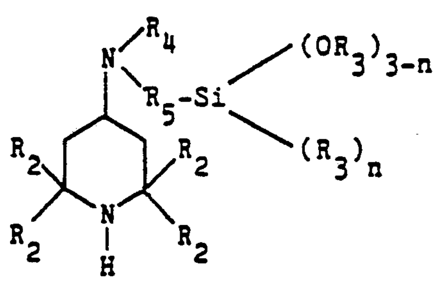

(IV)

wherein:

R represents an aliphatic hydrocarbon or oxyhydrocarbon group, containing from 2 to 10 carbon atoms;

$R_2$ represent the methyl radical;

$R_3$ represent independently the methyl or ethy' radical;

$R_4$ represents a straight or branched alkyl group, containing from 1 to 10 carbon atoms;

$R_5$ represents a straight or branched alkylene radical containing from 2 to 5 carbon atoms, and

n is 0, 1 or 2.

either with a monohydroxy aliphatic alcohol having at least 6 carbon atoms, or with a polyhydroxy aliphatic alcohol having at least 4 carbon atoms, the ratio of the methoxy or the ethoxy groups to the alcoholic hydroxyls being from 1:1 to 3:1, continuously removing the as-formed methanol or ethanol, and recovering the transesterification product.

2. Process according to claim 1, characterized in that the aliphatic mono- or poly-hydroxyalcohol is selected among: hexanol, octanol, ethylhexanol, caprylic alcohol, cetyl alcohol, lauryl alcohol, stearyl alcohol, diethylene glycol monobutyl ether, butanediol, pentanediol, hexanediol, decanediol, 2,2-dimethylpropanediol, diethylene glycol, pentaerythritol and trimethylolpropane.

3. Process according to claim 1, characterized in that the transesterification catalyst is sodium methoxide, in an amount comprised within the range of from 0.2 to 2% by weight relatively to the reactants.

4. Process according to claim 1, characterized in that the reaction is carried out in the absence of solvents or of diluents, at a temperature of from 100 to 150°C, under reduced pressure, and/or under a flow of inert gas.

5. Process according to claim 4, characterized in that the reaction is continued until a molecular weight of the reaction product comprised within the range of from 300 to 1000 is obtained.

6. Process according to claims 1, 4 and 5, characterized in that the reaction is carried out for times of from 30 minutes to 4 hours.

7. Stabilizer compounds obtained according to the process of claims from 1 to 6.

8. Stabilized polymeric compositions containing an organic polymer and a stabilizing amount of at least one of the stabilizers according to claim 7.

**Patentansprüche**

1. Verfahren zur Herstellung von sterisch gehinderten substituierten Aminen zum Stabilisieren von organischen Polymeren, umfassend ein katalytisches Umestern eines sterisch gehinderten Amins, das wenigstens eine Methoxysilanol- oder Ethoxysilanolgruppe enthält, ausgewählt aus den Verbindungen mit den Formeln:

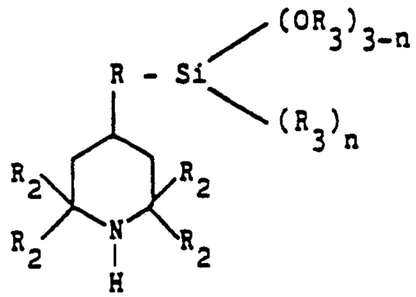

(I)

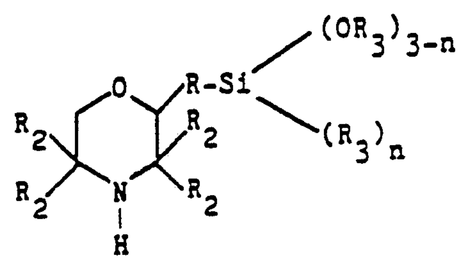

(II)

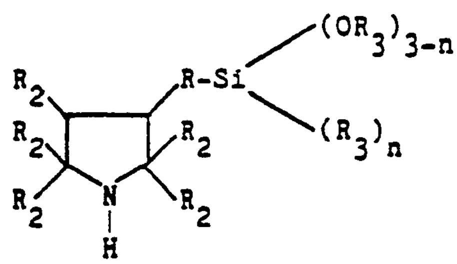

(III)

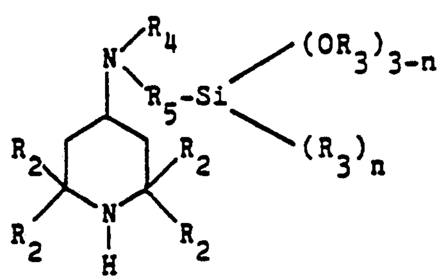

(IV)

worin:

R eine aliphatische Kohlenwasserstoff- oder Hydroxykohlenwasserstoffgruppe mit 2—10 Kohlenstoffatomen bedeutet;

$R_2$ den Methylrest bedeutet;

$R_3$ unabhängig voneinander den Methylrest oder Ethylrest darstellt;

$R_4$ eine gerade oder verzweigte Alkylgruppe mit 1—10 Kohlenstoffatomen bedeutet;

$R_5$ einen geraden oder verzweigten Alkylenrest mit 2 bis 5 Kohlenstoffatomen bedeutet; und

n den Wert 0, 1 oder 2 aufweist,

entweder mit einem einwertigen aliphatischen Alkohol mit wenigstens 6 Kohlenstoffatomen oder mit einem mehrwertigen aliphatischen Alkohol mit wenigstens 4 Kohlenstoffatomen, wobei das Verhältnis der Methoxy- oder Ethoxygruppen zu den alkoholischen Hydroxylgruppen von 1:1 bis 3:1 beträgt, kontinuierliches Abtrennen des Methanols oder Ethanols im Laufe seiner Bildung und Gewinnen des Umesterungsprodukts.

2. Verfahren nach Anspruch 1, dadurch gekennzeichnet, daß der aliphatische ein- oder mehrwertige Alkohol ausgewählt wird unter Hexanol, Octanol, Ethylhexanol, Caprylalkohol, Cetylalkohol, Laurylalkohol, Stearylalkohol, Diethylenglykolmonobutylether, Butandiol, Pentandiol, Hexandiol, Decandiol, 2,2-Dimethylpropandiol, Diethylenglykol, Pentaerythrit und Trimethylolpropan.

3. Verfahren nach Anspruch 1, dadurch gekennzeichnet, daß der Umesterungskatalysator Natriummethoxid ist, in einer Menge von 0,2 bis 2 Gew.-%, bezogen auf die Reaktanten.

4. Verfahren nach Anspruch 1, dadurch gekennzeichnet, daß die Umsetzung in Abwesenheit von Lösungs- oder Verdünnungsmitteln bei einer Temperatur von 100 bis 150°C unter vermindertem Druck und/oder unter einem Inertgasstrom ausgeführt wird.

5. Verfahren nach Anspruch 4, dadurch gekennzeichnet, daß die Umsetzung fortgesetzt wird, bis ein Molekulargewicht des Reaktionsproduktes im Bereich von 300 bis 1000 erhalten wird.

6. Verfahren nach den Ansprüchen 1, 4 und 5, dadurch gekennzeichnet, daß die Umsetzung während Reaktionszeiten von 30 Minuten bis zu 4 Stunden ausgeführt wird.

7. Stabilisatorverbindungen, erhalten gemäß dem Verfahren der Ansprüche 1 bis 6.

8. Stabilisierte Polymerzusammensetzungen, enthaltend ein organisches Polymer und eine stabilisierende Menge wenigstens eines der Stabilisatoren gemäß Anspruch 7.

**Revendications**

1. Procédé de préparation d'amines substituées, stériquement encombrées et stabilisant des polymères organiques, comprenant la trans-estérification catalytique d'une amine stériquement encombrée portant au moins un groupe méthoxysilanol ou éthoxysilanol, choisie parmi les composés de formules:

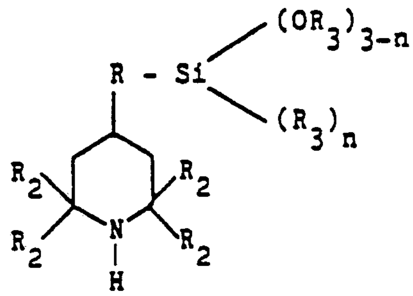

(I)

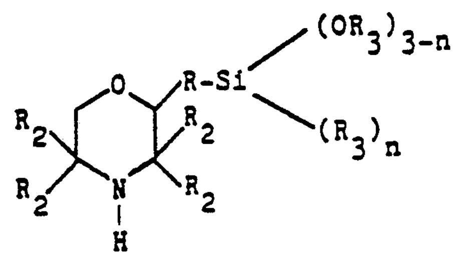

(II)

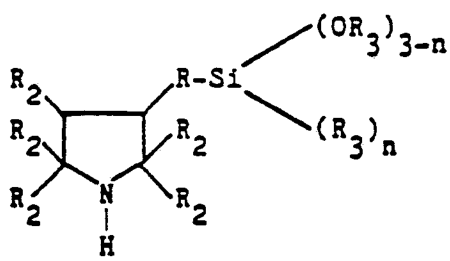

(III)

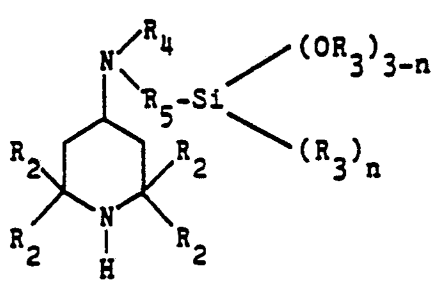

(IV)

dans lesquelles:

R représente un groupe hydrocarboné ou oxyhydrocarboné aliphatique, comportant de 2 à 10 atomes de carbone; préférence le radical tertio-butyle;

$R_2$ représente le radical méthyle;

$R_3$ représente indépendamment le radical méthyle ou éthyle;

$R_4$ représente un groupe alkyle à chaîne droite ou ramifiée, comportant de 1 à 10 atomes de carbone;

$R_5$ représente un radical alkylène à chaîne droite ou ramifiée, comportant de 2 à 5 atomes de carbone; et

n vaut 0,1 ou 2,

avec un monoalcool aliphatique comportant au moins 6 atomes de carbone ou avec un polyol aliphatique comportant au moins 4 atomes de carbone, le rapport des groupes méthoxy ou éthoxy aux groupes hydroxyles alcooliques valant de 1:1 à 3:1, l'élimination en continu du méthanol ou de l'éthanol ainsi formé, et la récupération du produit de trans-estérification.

2. Procédé conforme à la revendication 1, caractérisé en ce que le monoalcool aliphatique ou le polyol aliphatique est choisi parmi les suivants: hexanol, octanol, éthylhexanol, alcool caprylique, alcool cétylique, alcool laurylique, alcool stéarylique, éther monobutylique de diéthylène-glycol, butanediol, pentanediol, hexanediol, décanediol, 2,2-diméthylpropanediol, diéthylène-glycol, pentaérythritol, et triméthylolpropane.

3. Procédé conforme à la revendication 1, caractérisé en ce que le catalyseur de transestérification est du méthylate de sodium, en une quantité comprise dans l'intervalle de 0,2 à 2% en poids, par rapport aux réactifs.

4. Procédé conforme à la revendication 1, caractérisé en ce que la réaction est effectuée en l'absence de solvants ou de diluants, à une température de 100 à 150°C, sous pression réduite, et/ou sous un courant de gaz inerte.

5. Procédé conforme à la revendication 4, caractérisé en ce que la réaction est pourvuivie jusqu'à ce que l'on obtienne un produit de réaction présentant une masse moléculaire située dans l'intervalle de 300 à 1000.

6. Procédé conforme aux revendications 1, 4 et 5, caractérisé en ce que l'on met en oeuvre la réaction pendant des durées de 30 minutes à 4 heures.

7. Composés stabilisants obtenus selon la procédé des revendications 1 à 6.

8. Compositions polymères stabilisées, contenant un polymère organique et une quantité stabilisatrice d'au moins l'un des stabilisants conformes à la revendication 7.